# FASCICULE DE BREVET EUROPEEN

(11) **EP 0 994 647 B1**
(45) Date de publication et mention de la délivrance du brevet: **14.12.2005**
(21) Numéro de dépôt: 99916983.2
(22) Date de dépôt: 04.05.1999
(51) Int. Cl.: A01G 31/00, C03C 13/00, C03C 13/06

(54) **COMPOSITION DE LAINE MINERALE AYANT UN CARACTERE BIODEGRADABLE**
ZUSAMMENSETZUNG EINER BIOLOGISCH ABBAUBAREN MINERALWOLLE
BIODEGRABLE MINERAL WOOL COMPOSITION

(30) Priorité: 06.05.1998 FR 9805706
(43) Date de publication de la demande: 26.04.2000
(73) Titulaire: SAINT-GOBAIN ISOVER, 92400 Courbevoie (FR)
(72) Inventeur: BERNARD, Jean-Luc, 60600 Clermont (FR); LAFFON, Fabrice, 75018 Paris (FR); DE MERINGO, Alain, 75005 Paris (FR)
(74) Mandataire: Le Cam, Stéphane Georges Elie
(86) Numéro de dépôt international: PCT/FR1999/001054
(87) Numéro de publication internationale: WO 1999/056525

(56) Documents cités:
- EP-A- 0 459 897
- WO-A-97/30002
- DE-B- 1 026 928
- FR-A- 2 690 438

## Description

La présente invention concerne le domaine des laines minérales artificielles. Elle vise plus particulièrement les laines minérales destinées à fabriquer des matériaux d'isolation thermique et/ou acoustique ou des substrats de culture hors-sol.

Elle s'intéresse plus particulièrement aux laines minérales du type laine de roche, de basalte, c'est-à-dire dont les compositions chimiques entraînent une température de liquidus élevée et une grande fluidité à leur température de fibrage.

Conventionnellement, ce type de laine minérale est fibré par des procédés de centrifugation dits " externes ", par exemple du type de ceux utilisant une cascade de roues de centrifugation alimentées en matière fondue par un dispositif de distribution statique, comme décrit notamment dans les brevets EP-0 465 310 ou EP-0 439 385.

Le procédé de fibrage par centrifugation dit " interne ", c'est-à-dire ayant recours à des centrifugeurs tournant à grande vitesse et percés d'orifices, est par contre conventionnellement réservé au fibrage de laine minérale de type laine de verre, schématiquement de composition plus riche en oxydes alcalins, de température de liquidus moins élevée et de viscosité à température de fibrage plus grande que la laine de roche ou de basalte. Ce procédé est notamment décrit dans les brevets EP-0 189 354 ou EP-0 519 797.

Il a cependant été récemment mis au point des solutions techniques permettant d'adapter le procédé de centrifugation interne au fibrage de laine de roche ou de basalte, notamment en modifiant la composition du matériau constitutif des centrifugeurs et leurs paramètres de fonctionnement. On pourra pour plus de détails à ce sujet se reporter notamment au brevet WO93/02977. Cette adaptation s'est révélée particulièrement intéressante en ce sens qu'elle permet de combiner des propriétés qui n'étaient jusque-là inhérentes qu'à l'un ou l'autre des deux types de laine, roche ou verre. Ainsi, la laine de type roche obtenue par centrifugation interne est d'une qualité comparable à de la laine de verre, avec un taux d'infibrés moindre que de la laine de roche obtenue conventionnellement. Elle conserve cependant les deux atouts liés à sa nature chimique, à savoir un faible coût de matières chimiques et une tenue au feu très élevée.

Deux voies sont donc maintenant possibles pour fibrer de la laine de roche ou de basalte, le choix de l'une ou l'autre dépendant d'un certain nombre de critères, dont le niveau de qualité requis en vue de l'application visée et celui de faisabilité industrielle et économique.

A ces critères, s'est ajouté depuis quelques années celui d'un caractère biodégradable de la laine minérale, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation.

L'invention a alors pour but d'améliorer la composition chimique des laines minérales du type roche ou basalte, amélioration visant notamment à augmenter leur caractère biodégradable et/ou à concilier un caractère biodégradable avec une capacité à être fibrée par centrifugation interne (sans exclure cependant d'autres modes de fibrage).

L'invention a pour objet une laine minérale susceptible de se dissoudre dans un milieu physiologique, qui comprend les constituants ci-après selon les pourcentages pondéraux suivants :

| | |
|---|---|
| SiO₂ | 38-52%, de préférence 40-48% |
| Al₂O₃ | 17-23% |
| SiO₂ + Al₂O₃ | 56-75 %, de préférence 62-72 % |
| RO (CaO et/ou MgO) | 9-26%, de préférence 12-25% |
| MgO | 4-20%, notamment 7-16% |
| MgO/CaO | ≥0,8, de préférence ≥ 1,0 ou ≥1,15 |
| R₂O (Na₂O et/ou K₂O) | ≥ 2% |
| P₂O₅ | 0-5% |
| Fe₂O₃ (fer total) | > 1,7%, de préférence > 2%, |
| MnO | 0-4% |
| B₂O₃ | 0-5% |
| TiO₂ | 0-3% |

Elle peut, en outre comprendre, de préférence, des teneurs en Fe₂O₃ (fer total) et en P₂O₅ telles que :
1 ≤ Fe₂O₃ (fer total) / P₂O₅ ≤ 20 quand P₂O₅ ≥ 0,5% (Dans toute la suite du texte, tout pourcentage d'un constituant de la composition doit se comprendre comme un pourcentage pondéral et les compositions selon l'invention peuvent comporter jusqu'à 2 ou 3% de composés à considérer comme des impuretés non analysées, comme cela est connu dans ce type de famille de compositions).

La sélection d'une telle composition a permis de cumuler toute une série d'avantages, notamment en jouant sur les multiples rôles, complexes, que jouent un certain nombre de ses constituants spécifiques.

Ainsi, il s'agit bien d'une composition de laine minérale de type roche : son taux en oxydes alcalins (R₂O) essentiellement sous forme Na₂O et/ou K₂O est modéré, inférieur à 12 et plutôt inférieur à 10 ou même 8%. Et parallèlement, son taux en oxydes alcalino-terreux (RO), essentiellement sous forme CaO et/ou MgO, est relativement élevé, d'au moins 9% et même plutôt d'au moins 12% ou même 16%. Le taux en oxyde de fer (quantifié sous forme de Fe₂O₃ mais correspondant à la teneur totale en fer, par convention) a été réglé à un taux relativement significatif, à au moins 1,7% et plutôt même d'au moins 5%. Une présence dans la composition d'un tel taux se justifie tout particulièrement quand la composition doit être fibrée par centrifugation interne, car il a été constaté que celle-ci permettait de ralentir la corrosion des matériaux constituant le centrifugeur. L'oxyde de manganèse MnO pourrait notamment jouer un rôle similaire, c'est la raison pour laquelle la composition peut optionnellement en contenir quelques pourcents.

Par ailleurs, la viscosité au fibrage d'une telle composition peut être suffisante pour une centrifugation interne, on peut la qualifier de " roche dure", ce qui est notamment dû à une teneur appropriée en silice et en alumine.

Quant au caractère biodégradable, il était déjà connu que certains composés permettaient de l'améliorer considérablement dans des compositions de type roche notamment, comme le P₂O₅, alors que d'autres oxydes paraissaient au contraire tendre à le diminuer, tout au moins à pH neutre. On pourra se reporter, par exemple aux brevets EP-0 459 897 et WO93/22251. Cependant, un ajout massif de P₂O₅ ne s'est pas avéré dans le contexte de l'invention la voie la plus judicieuse. En effet, peuvent intervenir d'autres considérations, par exemple économiques, (le P₂O₅ provenant de matières premières coûteuses) et également techniques : les changements dans les proportions en P₂O₅, et notamment en alumine dans la composition peuvent en faire varier d'autres propriétés dans un sens indésirable ou inconnu. Ainsi, le P₂O₅ n'est pas sans influence sur la viscosité de la composition, tout comme l'alumine. Or, tout particulièrement pour les compositions de type roche à fibrer par centrifugation interne, celles qui intéressent le plus l'invention, le comportement viscosimétrique de la composition est un critère très critique et important à maîtriser, régler de façon adéquate.

Par ailleurs, certains composés peuvent être intéressants pour certaines propriétés et pourtant être non favorables à une haute biodégradabilité, ce qui paraît être le cas du fer, avantageux comme mentionné plus haut pour prolonger la durée de vie des centrifugeurs, mais qui pourrait tendre à diminuer la biodégradabilité de la laine de roche, ou le cas de l'alumine, judicieux pour régler la viscosité de la composition mais pouvant ne pas être très favorable vis-à-vis de la biosolubilité, notamment mesurée par des tests in vitro à pH neutre.

L'invention a alors établi un compromis judicieux entre toutes ces données, essentiellement de la façon suivante : la composition peut contenir du P₂O₅, mais dans une teneur modérée d'au plus 5%, et plutôt d'au plus 4%. Elle contient également de l'oxyde de fer, avantageux mais pour d'autres raisons que la biodégradabilité. Elle parvient cependant à un niveau de biodégradabilité élevé sans ajout excessif de P₂O₅ (ou tout autre composé très particulier supposé favorable à la biodégradabilité), par un autre moyen, qui a consisté, notamment, à jouer sur la proportion relative en MgO par rapport à CaO. En effet, généralement, les compositions de type roche contenaient une proportion en chaux CaO supérieure à celle en magnésie MgO. Il s'est avéré qu'en inversant ce rapport, on parvenait à atteindre le niveau de biodégradabilité élevé que l'on ne pouvait jusque-là obtenir qu'avec des teneurs importantes en P₂O₆ pour " compenser " des teneurs significatives en alumine et en fer. A noter un avantage subsidiaire non négligeable lié à un taux en P₂O₅ faible : trop de P₂O₅ tend en effet à augmenter la température de liquidus de la composition, ce qui n'est évidemment pas favorable à un fibrage par centrifugation interne.

Un autre trait caractéristique selon l'invention concerne la combinaison de ce rapport particulier MgO/CaO avec un taux d'alumine assez élevé, puisque d'au moins 17%. Il s'est avéré que cette combinaison permettait de remplir de façon satisfaisante les critères de biosolubilité, aussi bien mesurés selon des tests in vitro à pH neutre que selon des tests in vitro à pH acide. En effet, il n'a pas été tranché de façon définitive sur le point de savoir quel pH était le plus représentatif du milieu physiologique in vivo, notamment celui des régions pulmonaires. Un fort taux d'alumine paraissait jusque là être favorable à une dissolution rapide à pH acide mais faible/lente à pH neutre.

L'invention permet d'obtenir un haut niveau de biosolubilité, au moins mesuré in vitro, quel que soit le pH, en sélectionnant un fort taux d'alumine, mais en adaptant la teneur en oxydes alcalino-terreux de façon à conserver son effet bénéfique à pH acide sans être pénalisant à pH neutre.

A noter que la somme SiO₂ + Al₂O₃ permet de régler pour une bonne part le comportement viscosimétrique des compositions.

Selon un mode de réalisation de l'invention, les compositions respectent la relation :
R₂O / Al₂O₃ entre 0,2 et 0,8

Le taux en oxydes alcalins R₂O, soit Na₂O et/ou K₂O essentiellement, est de préférence d'au moins 5%, notamment maintenu dans des gammes de l'ordre de 5 à 12% (ou éventuellement 13%).

Quant au taux en oxyde(s) de fer (fer total), comme vu plus haut, il est avantageux d'en prévoir au moins 4%, et même au moins 5%, pour protéger les centrifugeurs, notamment entre 5 et 9%. En outre, les oxydes de fer peuvent jouer favorablement sur la tenue au feu de la laine minérale obtenue.

Avantageusement, les compositions selon l'invention respectent également la relation suivante, exprimée selon un rapport de pourcentages pondéraux : MgO / CaO compris entre 1 et 3. On obtient ainsi l'effet avantageux mentionné plus haut, sans qu'un excès trop important de MgO par rapport au CaO rende l'approvisionnement en matières premières de ces oxydes trop compliqué ou onéreux.

Les compositions selon l'invention ont de préférence un taux en P₂O₅ d'au moins 0,5 ou d'au moins 1%, et notamment de l'ordre de 1,5 à 4%. Ce taux modéré influe sur la biodégradabilité très avantageusement, sans trop pénaliser économiquement la composition ni trop influer sur sa température de liquidus.

Selon une autre variante, le taux de P₂O₅ peut être inférieur, notamment de 0% ou, par exemple, de 0,1 à 0,5% ou de 0,1 à 1 %.

Le taux préférentiel en CaO de la composition selon l'invention est inférieur ou égal à 15%, notamment d'au moins 2%, avantageusement entre 5 et 14%.

Parallèlement, le taux préférentiel en MgO de la composition est inférieur ou égal à 20%, et de préférence d'au moins 7%, la gamme préférée se situant entre 5 et 14%.

On peut considérer qu'outre le P₂O₅ éventuel, les deux composés qui ont le plus d'influence sur la viscosité au fibrage de la composition sont la silice et l'alumine. On peut ainsi sélectionner au moins 60% en (SiO₂ + Al₂O₃ + P₂O₅) pour garantir une viscosité suffisante pour un fibrage par centrifugation interne, notamment dans des valeurs comprises entre 60 et 70%, notamment d'au moins 61 ou 62%.

L'oxydation de la composition peut par exemple être contrôlée par l'ajout d'oxyde de manganèse MnO.

Ajouter de l'oxyde de bore, qui reste optionnel, peut permettre l'améliorer les propriétés d'isolation thermique de la laine minérale, notamment en tendant à abaisser son coefficient de conductivité thermique dans sa composante radiative. Optionnellement, la composition peut aussi contenir du TiO₂ en tant qu'impuretés ou ajouté volontairement, par exemple dans une teneur jusqu'à 2%.

Selon une variante préférée non limitative, la teneur en alumine des compositions selon l'invention est d'au moins 18%, notamment d'au moins 19 ou d'au moins 20%.

La différence T_{log 2,5} - T_{tiq} est de préférence d'au moins 10°C, de préférence d'au moins 20 ou 30°C : cette différence définit le " palier de travail " des compositions de l'invention, c'est-à-dire la gamme de températures dans laquelle on peut les fibrer, par centrifugation interne tout particulièrement. La température à laquelle les compositions ont une viscosité égale à 10^{2,5} (en poises) est notée T_{log 2,5} et la température de liquidus est notée T_{liq}.

Les laines minérales, comme mentionné plus haut, présentent un niveau de biosolubilité satisfaisant, que la méthode de mesure implique un pH neutre, légèrement basique, ou un pH acide.

Les laines minérales selon l'invention présentent ainsi généralement une vitesse de dissolution d'au moins 30, de préférence d'au moins 40 ou 50 ng/cm² par heure mesurée à pH 4,5 et d'au moins 30, de préférence d'au moins 40 ou 50 ng/cm² par heure mesurée à pH 7,5.

Elles présentent également généralement une vitesse de dissolution d'au moins 30, et de préférence d'au moins 40 ou d'au moins 50 ng/cm² par heure mesurée à pH 4,5 et une vitesse de dissolution d'au moins 30, et de préférence d'au moins 40 ou d'au moins 50 ng/cm² par heure mesurée à pH 6,9.

Elles présentent généralement aussi une vitesse de dissolution d'au moins 60, notamment d'au moins 80 ng/cm² par heure mesurée à pH 4,5 et/ou une vitesse de dissolution d'au moins 40, notamment d'au moins 60 ng/cm² par heure mesurée à pH 6,9 et/ou une vitesse de dissolution d'au moins 40, notamment d'au moins 60 ng/cm² par heure mesurée à pH 7,5.

On les utilise principalement pour fabriquer des produits d'isolation thermique et/ou acoustique ou des substrats de culture hors-sol. L'invention a également pour objet tous les produits comprenant au moins pour partie les laines minérales définies plus haut.

D'autres détails et caractéristiques avantageuses ressortent de la description ci-après de modes de réalisation préférés non limitatifs.

Le tableau 1 ci-après regroupe les compositions chimiques, en pourcentages pondéraux, de sept exemples.

Quand la somme de toutes les teneurs de tous les composés est légèrement inférieure ou légèrement supérieure à 100%, il est à comprendre que la différence avec 100% correspond aux impuretés/composants minoritaires non analysés et/ou n'est dûe qu'à l'approximation acceptée dans ce domaine dans les méthodes d'analyse utilisées.

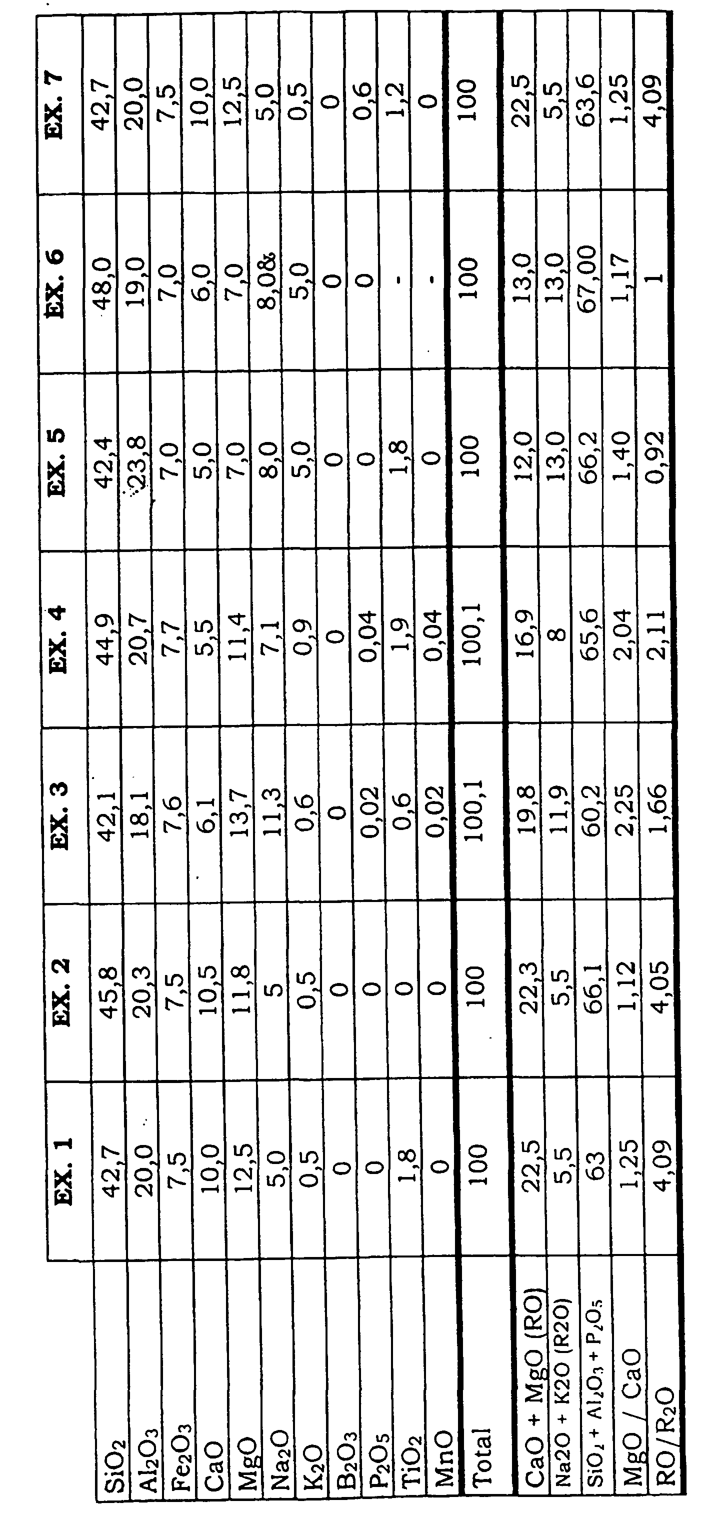

Les compositions selon ces exemples ont été fibrées par centrifugation interne, notamment selon l'enseignement du brevet WO93/02977 précité.

Leurs paliers de travail, définis par la différence T_{log 2.5} - T_{liq}, sont largement positifs.

Toutes ont un rapport MgO/CaO supérieur à 1, et un taux de P₂O₅ très modéré (inférieur à 1%) et un taux d'oxyde de fer aux environs de 7% qui s'est avéré avantageux pour limiter la corrosion des assiettes de centrifugation. Elles ont aussi un taux en alumine élevé d'environ 18 à 20%, avec une somme (SiO₂ + Al₂O₃) assez élevée et un taux en oxydes alcalins d'au moins 5%..

Leur biodégradabilité, notamment mesurée à pH neutre ou faiblement acide (pH 4,9 ou 7,5), ou à pH acide (4,5) est élevée.

La composition selon l'exemple 7, qui contient plus de 0,5% en P₂O₅ vérifie le ratio Fe₂O₃/P₂O₅ entre 1 et 20, ici égal à 12,5, conformément à une variante préférée de l'invention.

## Revendications

1. Laine minérale susceptible de se dissoudre dans un milieu physiologique, ***caractérisée en ce qu'elle*** comprend les constituants ci-après selon les pourcentages pondéraux suivants :
| | |
|---|---|
| SiO₂ | 38-52%, de préférence 40-48% |
| Al₂O₃ | 17-23% |
| SiO₂ + Al₂O₃ | 56-75%, de préférence 62-72% |
| RO (CaO + MgO) | 9-26%, de préférence 12-25% |
| MgO | 4-20%, notamment 7-16% |
| MgO/CaO | ≥ 0,8, de préférence ≥ 1,0 ou ≥ 1,15 |
| R₂O (Na₂O + K₂O) | ≥ 2% |
| P₂O₅ | 0-5% |
| Fe₂O₃ (fer total) | > 1,7%, de préférence > 2% |
| B₂O₃ | 0-5% |
| MnO | 0-4% |
| TiO₂ | 0-3% |
***et en ce que*** le rapport R₂O/ Al₂O₃ est compris entre 0,2 et 0,8

2. Laine minérale selon la revendication 1, ***caractérisée en ce qu'elle*** comprend des teneurs en Fe₂O₃ (fer total) et en P₂O₅ telles que :
1 ≤ Fe₂O₃ (fer total)/P₂O₅ ≤ 20 quand P₂O₅ ≥ 0,5%

3. Laine minérale selon l'une des revendications précédentes, ***caractérisée en ce qu'elle*** respecte la relation :
R₂O > 5%, de préférence 5-12%

4. Laine minérale selon l'une des revendications précédentes, ***caractérisée en ce qu'elle*** respecte la relation :
MgO / CaO 1-3

5. Laine minérale selon l'une des revendications précédentes, ***caractérisée en ce qu'elle*** comprend au moins 0,5 ou au moins 1% en poids de P₂O₅, notamment entre 1,5 et 4%.

6. Laine minérale selon l'une des revendications précédentes, ***caractérisée en ce qu'elle*** comprend du MgO selon le pourcentage pondéral suivant :
MgO ≤ 20%, de préférence ≥ 7%, notamment entre 7 et 13%

7. Laine minérale selon l'une des revendications précédentes, ***caractérisée* en ce *qu'******elle*** comprend du CaO selon le pourcentage pondéral suivant :
CaO ≤ 15%, de préférence ≥ 2%, notamment entre 5 et 14%

8. Laine minérale selon l'une des revendications précédentes, ***caractérisée en ce qu'elle*** comprend au moins 4% en poids en Fe₂O₃ (fer total), notamment au moins 5%, de préférence entre 5 et 9%.

9. Laine minérale selon l'une des revendications précédentes, ***caractérisée en ce qu'elle*** comprend, en pourcentages pondéraux, les composés SiO₂, Al₂O₃ et P₂O₅ dans des proportions telles que :
SiO₂ + Al₂O₃ + P₂O₅ : au moins 60%, notamment 60 à 70%

10. Laine minérale selon l'une des revendications précédentes, ***caractérisée en ce qu'elle*** comprend Al₂O₃ selon le pourcentage pondéral suivant :
Al₂O₃ ≥ 18%, notamment ≥ 19% ou 20%

11. Laine minérale selon l'une des revendications précédentes, ***caractérisée en ce qu'elle*** présente une vitesse de dissolution d'au moins 30 ng/cm² par heure mesurée à pH 4,5 et une vitesse de dissolution d'au moins 30 ng/cm² par heure mesurée à pH 7,5.

12. Laine minérale selon l'une des revendications précédentes, **caractérisée en ce *qu'******elle*** présente une vitesse de dissolution d'au moins 30 ng/cm² par heure mesurée à pH 4,5 et une vitesse de dissolution d'au moins 30 ng/cm² par heure mesurée à pH 6,9.

13. Laine minérale selon l'une des revendications précédentes, **caractérisée en ce *qu'******elle*** présente une vitesse de dissolution d'au moins 60 ng/cm² par heure mesurée à pH 4,5 et/ou une vitesse de dissolution d'au moins 40 ng/cm² par heure mesurée à pH 7,5 et/ou une vitesse de dissolution d'au moins 40 ng/cm² par heure mesurée à pH 6,9.

14. Laine minérale selon l'une des revendications précédentes, ***caractérisée en ce qu'elle*** est obtenue par centrifugation interne.

15. Produit d'isolation thermique et/ou acoustique ou substrat de culture hors-sol comprenant au moins pour partie la laine minérale selon l'une des revendications précédentes.

## Patentansprüche

1. Mineralwolle, die geeignet ist, sich in einer physiologischen Umgebung aufzulösen, **dadurch gekennzeichnet, dass** sie die nachstehend aufgeführten Bestandteile gemäß den folgenden prozentualen Gewichtsanteilen aufweist:
| | |
|---|---|
| SiO₂ | 38-52%, vorzugsweise 40-48% |
| Al₂O₃ | 17-23% |
| SiO₂ + Al₂O₃ | 56-75%, vorzugsweise 62-72% |
| RO (CaO + MgO) | 9-26%, vorzugsweise 12-25% |
| MgO | 4-20%, vorzugsweise 7-16% |
| MgO/CaO | ≥ 0,8, vorzugsweise ≥ 1,0 oder ≥ 1,15 |
| R₂O (Na₂O + K₂O) | ≥ 2% |
| P₂O₅ | 0-5% |
| Fe₂O₃ (Gesamteisen) | > 1,7%, vorzugsweise > 2% |
| B₂O₃ | 0-5% |
| MnO | 0-4% |
| TiO₂ | 0-3% |
und dass das Verhältnis R₂O/Al₂O₃ zwischen 0,2 und 0,8 beträgt.

2. Mineralwolle nach Anspruch 1, **dadurch gekennzeichnet, dass** sie einen Gehalt an Fe₂O₃ (Gesamteisen) und an P₂O₅ aufweist, sodass
1 ≤ Fe₂O₃ (Gesamteisen)/P₂O₅ ≤ 20, wenn P₂O₅ ≥ 0,5%.

3. Mineralwolle nach Anspruch 1 oder 2, **dadurch gekennzeichnet, dass** sie der Beziehung R₂O > 5%, vorzugsweise 5-12%, genügt.

4. Mineralwolle nach einem der Ansprüche 1 bis 3, **dadurch gekennzeichnet, dass** sie der Beziehung MgO/CaO = 1-3 genügt.

5. Mineralwolle nach einem der Ansprüche 1 bis 4, **dadurch gekennzeichnet, dass** sie wenigstens 0,5 oder wenigstens 1 Gew.-%, insbesondere zwischen 1,5 und 4 Gew.-%, P₂O₅ enthält.

6. Mineralwolle nach einem der Ansprüche 1 bis 5, **dadurch gekennzeichnet, dass** sie MgO gemäß dem folgenden prozentualen Gewichtsanteil enthält:
MgO ≤ 20%, vorzugsweise ≥ 7%, insbesondere zwischen 7 und 13%.

7. Mineralwolle nach einem der Ansprüche 1 bis 6, **dadurch gekennzeichnet, dass** sie CaO gemäß dem folgenden prozentualen Gewichtsanteil enthält:
CaO ≤ 15%, vorzugsweise ≥ 2%, insbesondere zwischen 5 und 14%.

8. Mineralwolle nach einem der Ansprüche 1 bis 7, **dadurch gekennzeichnet, dass** sie wenigstens 4 Gew.-% Fe₂O₃ (Gesamteisen) enthält, insbesondere wenigstens 5%, vorzugsweise zwischen 5 und 9%.

9. Mineralwolle nach einem der Ansprüche 1 bis 8, **dadurch gekennzeichnet, dass** sie prozentuale Gewichtsanteile der Verbindungen SiO₂, Al₂O₃ und P₂O₅ in einem derartigen Verhältnis enthält, dass
SiO₂ + Al₂O₃ + P₂O₅ wenigstens 60%, insbesondere 60 bis 70%, beträgt.

10. Mineralwolle nach einem der Ansprüche 1 bis 9, **dadurch gekennzeichnet, dass** sie Al₂O₃ gemäß dem folgenden prozentualen Gewichtsanteil enthält:
Al₂O₃ ≥ 18%, insbesondere ≥19 oder 20%.

11. Mineralwolle nach einem der Ansprüche 1 bis 10, **dadurch gekennzeichnet, dass** sie eine Auflösegeschwindigkeit von wenigstens 30 ng/cm² pro Stunde gemessen bei einem pH-Wert von 4,5 und eine Auflösegeschwindigkeit von wenigstens 30 ng/cm² pro Stunde gemessen bei einem pH-Wert von 7,5 besitzt.

12. Mineralwolle nach einem der Ansprüche 1 bis 11, **dadurch gekennzeichnet, dass** sie eine Auflösegeschwindigkeit von wenigstens 30 ng/cm² pro Stunde gemessen bei einem pH-Wert von 4,5 und eine Auflösegeschwindigkeit von wenigstens 30 ng/cm² pro Stunde gemessen bei einem pH-Wert von 6,9 besitzt.

13. Mineralwolle nach einem der Ansprüche 1 bis 12, **dadurch gekennzeichnet, dass** sie eine Auflösegeschwindigkeit von wenigstens 60 ng/cm² pro Stunde gemessen bei einem pH-Wert von 4,5 und/oder eine Auflösegeschwindigkeit von wenigstens 40 ng/cm² pro Stunde gemessen bei einem pH-Wert von 7,5 und/oder eine Auflösegeschwindigkeit von wenigstens 40 ng/cm² pro Stunde gemessen bei einem pH-Wert von 6,9 besitzt.

14. Mineralwolle nach einem der Ansprüche 1 bis 13, **dadurch gekennzeichnet, dass** sie durch interne Zentrifugation hergestellt wird.

15. Erzeugnis zur thermischen und oder akustischen Isolierung oder Substrat für den erdelosen Anbau, das wenigstens zum Teil die Mineralwolle nach einem der Ansprüche 1 bis 14 aufweist.

## Claims

1. Mineral wool capable of being dissolved in a physiological medium, **characterized in that** it comprises the constituents below in the following percentages by weight:
| | |
|---|---|
| SiO₂ | 38 - 52%, preferably 40 - 48% |
| Al₂O₃ | 17-23% |
| SiO₂+Al₂O₃ | 56 -75%, preferably 62 - 72% |
| RO (CaO and/or MgO) | 9 - 26%, preferably 12 - 25% |
| MgO | 4 - 20%, especially 7 - 16% |
| MgO/CaO | ≥0.8, preferably ≥ 1.0 or ≥ 1.15 |
| R₂O (Na₂O and/or K₂O) | ≥ 2% |
| P₂O₅ | 0-5% |
| Fe₂O₃ (total iron) > | 1.7%, preferably > 2% |
| MnO | 0 - 4% |
| B₂O₃ | 0 - 5% |
| TiO₂ | 0- 3% |
**and in that** it satisfies the relationship R₂O/Al₂O₃ 0.2 - 0.8

2. Mineral wool according to Claim 1, ***characterized in that*** it comprises: Fe₂O₃ (total iron) and P₂O₅ contents such that:
1 ≤ Fe₂O₃ (total iron)/P₂O₅ ≤ 20 when P₂O₅ ≥ 0.5%

3. Mineral wool according to one of the preceding claims, ***characterized in that*** it satisfies the relationship
R₂O > 5%, preferably 5 - 12%

4. Mineral wool according to one of the preceding claims, ***characterized in that*** it satisfies the relationship:
MgO/CaO 1 - 3

5. Mineral wool according to one of the preceding claims, ***characterized in that*** it comprises at least 0.5 or at least 1 %, especially between 1.5 and 4%, by weight of P₂O₅.

6. Mineral wool according to one of the preceding claims, ***characterized in that*** it comprises MgO in the following percentage by weight:
MgO ≤ 20%, preferably ≥ 7%, especially between 7 and 13%.

7. Mineral wool according to one of the preceding claims, ***characterized in that*** it comprises CaO in the following percentage by weight:
CaO ≤ 15%, preferably ≥ 2% especially between 5 and 14%.

8. Mineral wool according to one of the preceding claims, ***characterized in that*** it comprises at least 4%, especially at least 5% and preferably between 5 and 9% by weight of Fe₂O₃ (total iron)

9. Mineral wool according to one of the preceding claims, ***characterized in that*** it comprises, in percentages by weight, the compounds SiO₂, Al₂O₃ and P₂O₅ in proportions such that:
SiO₂ + Al₂O₃ + P₂O₅: at least 60%, especially 60 to 70%.

10. Mineral wool according to one of the preceding claims, ***characterized in that*** it comprises Al₂O₃ in the following percentages by weight:
Al₂O₃ ≥ 18%, especially ≥ 19% or 20%.

11. Mineral wool according to one of the preceding claims, ***characterized in that*** it has a rate of dissolution of at least 30 ng/cm² per hour measured at pH 4.5 and a rate of dissolution of at least 30 ng/cm² per hour measured at pH 7.5.

12. Mineral wool according to one of the preceding claims, ***characterized in that*** it has a rate of dissolution of at least 30 ng/cm² per hour measured at pH 4.5 and a rate of dissolution of at least 30 ng/cm² per hour measured at pH 6.9.

13. Mineral wool according to one of the preceding claims, ***characterized in that*** it has a rate of dissolution of at least 60 ng/cm² per hour measured at pH 4.5 and/or a rate of dissolution of at least 40 ng/cm² per hour measured at pH 7.5 and/or a rate of dissolution of at least 40 ng/cm² per hour measured at pH 6.9.

14. Mineral wool according to one of the preceding claims, ***characterized in that*** it is obtained by internal centrifuging.

15. Thermal and/or acoustic insulation product or soilless-culture substrate comprising, at least partly, the mineral wool according to one of the preceding claims.
